# EUROPEAN PATENT APPLICATION

(11) **EP 4 806 814 A1**
(43) Date of publication of application: **16.09.2026**
(21) Application number: 24905428.9
(22) Date of filing: 27.05.2024
(51) Int. Cl.: B65G 54/02

(54) **CONVEYING DEVICE AND CONVEYING LINE**

(30) Priority: 22.12.2023 CN 202311786035
(71) Applicant: Suzhou Zongwei Technology Co., Ltd, Suzhou, Jiangsu 215101 (CN)
(72) Inventor: LU, Hongxing, Suzhou, Jiangsu 215101 (CN); LIU, Shengqiang, Suzhou, Jiangsu 215101 (CN); ZHOU, Xingpeng, Suzhou, Jiangsu 215101 (CN)
(74) Representative: Manitz Finsterwald Patent- und Rechtsanwaltspartnerschaft mbB
(86) International application number: PCT/CN2024/095429
(87) International publication number: WO 2025/129924

(57) **Abstract**

A conveying device and a conveying line. The conveying device is configured to convey trays, and comprises: a linear conveying mechanism provided with a first conveying end (101) and a second conveying end (102); and a curved conveying mechanism provided with a first docking end (311) and a second docking end (312). At least one linear conveying mechanism and at least one curved conveying mechanism are provided, and the linear conveying mechanism and the curved conveying mechanism can be combined at will and are connected end to end; when the linear conveying mechanism is in butt joint with the curved conveying mechanism, one of the first conveying end (101) and the second conveying end (102) of the linear conveying mechanism is in butt joint with one of the first docking end (311) and the second docking end (312) of the curved conveying mechanism; and when two adjacent curved conveying mechanisms are in butt joint with each other, one of the first docking end (311) and the second docking end (312) of one curved conveying mechanism is in butt joint with one of the first docking end (311) and the second docking end (312) of another curved conveying mechanism.

## Description

### RELATED APPLICATIONS

This application claims priority to Chinese Patent Application No. 202311786035.8, entitled "CONVEYING DEVICE AND CONVEYOR LINE", and filed on December 22, 2023, the entirety of which is incorporated herein by reference.

### TECHNICAL FIELD

The present application relates to the field of conveying technologies, and in particular, to a conveying device and a conveyor line.

### BACKGROUND

A magnetic driving conveyor line mainly includes a mover and a stator. Current flows through a coil of the stator to generate a magnetic field, which interacts with a magnetic field of a permanent magnet plate on the mover to cause motion. A position detection device obtains motion state data such as a position and a speed of the mover and sends such data to a control system. By controlling the current in the coil, strength and a direction of the magnetic field are adjusted to maintain a desired position and speed of the mover, thereby achieving precise control over the motion of the mover.

Due to a flexible design feature of the magnetic driving conveyor line, in an actual production process, different shapes of tracks such as linear, circular, and curved tracks are designed according to factors such as spatial limitations and transportation requirements, so as to adapt to different application scenarios to the greatest extent. For a region with a specific motion path requirement, a curved track may be adopted to flexibly adjust the layout, bypass obstacles without being constrained by space, minimize friction, achieve smoother and faster movement, and improve efficiency and a speed of the magnetic levitation conveyor line. Compared with right-angle turning or other forms of turning, curved turning can be completed within a relatively short distance, thereby saving space and improving efficiency.

In the related art, due to a continuous integrated curved turning structure, a pallet carrying materials may be subjected to additional force and moment during the turning process, which affects motion and stability of the pallet, and, products with different loads and sizes cannot be flexibly transported, resulting in a decrease in overall transportation efficiency. Moreover, due to a strict requirement of an integrated structure for a site, a large space is required and it is difficult to adjust a conveying direction of the pallet.

### SUMMARY

According to various embodiments of the present application, a conveying device and a conveyor line are provided.

In a first aspect, the present application provides a conveying device configured for conveying a pallet, the conveying device including:
a linear conveying mechanism provided with a first conveying end and a second conveying end; and
a curved conveying mechanism provided with a first connecting end and a second connecting end;
where at least one linear conveying mechanism and at least one curved conveying mechanism are respectively provided, and the linear conveying mechanism and the curved conveying mechanism are arbitrarily combinable and connected end to end, so as to change a conveying direction of the pallet;
when the linear conveying mechanism is connected with the curved conveying mechanism, one of the first conveying end and the second conveying end of the linear conveying mechanism is connected with one of the first connecting end and the second connecting end of the curved conveying mechanism; and
when two adjacent curved conveying mechanisms are connected to each other, one of the first connecting end and the second connecting end of one curved conveying mechanism is connected with one of the first connecting end and the second connecting end of another curved conveying mechanism.

In one of embodiments, the linear conveying mechanism includes a first straight guide rail and a second straight guide rail. The curved conveying mechanism includes a first curved guide rail. The first curved guide rail connects the first straight guide rail and the second straight guide rail.

In one of the embodiments, the first curved guide rail guides the pallet to move from the first straight guide rail to the second straight guide rail.

In one of the embodiments, the first curved guide rail guides the pallet to move from the second straight guide rail to the first straight guide rail.

In one of the embodiments, the linear conveying mechanism further includes a third straight guide rail, and the curved conveying mechanism further includes a second curved guide rail; and
the first curved guide rail connects the first straight guide rail and the second straight guide rail, and the second curved guide rail connects the second straight guide rail and the third straight guide rail; the first curved guide rail guides the pallet to move from the first straight guide rail to the second straight guide rail, and the second curved guide rail guides the pallet to move from the second straight guide rail to the third straight guide rail.

In one of the embodiments, the linear conveying mechanism further includes a third straight guide rail, and the curved conveying mechanism further includes a second curved guide rail. The second curved guide rail guides the pallet to move from the third straight guide rail to the second straight guide rail, and the first curved guide rail guides the pallet to move from the second straight guide rail to the first straight guide rail.

In one of the embodiments, the second curved guide rail is configured to connect the second straight guide rail and the third straight guide rail, so that the pallet moves from the first straight guide rail to the second straight guide rail via the first curved guide rail, and then to the third straight guide rail via the second curved guide rail, to turn the pallet.

In one of the embodiments, an arc angle of the first curved guide rail and an arc angle of the second curved guide rail are arc angles corresponding to an angle of 90 degrees to 180 degrees.

In one of the embodiments, an arc angle of the first curved guide rail and an arc angle of the second curved guide rail are arc angles corresponding to an angle of 90 degrees;
where a conveying direction of the first straight guide rail crosses that of the second straight guide rail, and the conveying direction of the first straight guide rail is the same as that of the third straight guide rail.

In one of the embodiments, the linear conveying mechanism and the curved conveying mechanism are each provided with a coil, and a bottom of the pallet is provided with a magnetic plate. The magnetic plate cooperates with the coil to drive the pallet to move on the linear conveying mechanism and the curved conveying mechanism.

In one of the embodiments, the linear conveying mechanism and the curved conveying mechanism are each further provided with an inner guide member and an outer guide member. The inner guide member and the outer guide member are disposed on two sides of the coil to guide the pallet.

In one of the embodiments, the curved conveying mechanism is further provided with an inner auxiliary member and an outer auxiliary member. The inner auxiliary member and the outer auxiliary member are respectively disposed on the two sides of the coil. The inner auxiliary member and the outer auxiliary member respectively abut against a bottom surface of the pallet to provide auxiliary guidance for the pallet.

In one of the embodiments, the inner auxiliary member and the outer auxiliary member are rollers or pulleys.

In one of the embodiments, the conveying device further includes a sensor and a monitoring system, so that a position of the pallet and distances between pallets in real time are monitored.

In a second aspect, the present application provides a conveyor line, the conveyor line including:
the conveying device as described in any one of the above technical solutions.

### BRIEF DESCRIPTION OF THE DRAWINGS

For a better description and illustration of the embodiments and/or examples of the inventions disclosed herein, reference may be made to one or more accompanying drawings. Additional details or examples used to describe the accompanying drawings should not be considered as limiting the scope of any one of the disclosed inventions, the currently described embodiments and/or examples, or the best mode of these inventions currently understood.
FIG. 1 is a perspective view of an implementation of a conveying device according to the present application.
FIG. 2 is a top view of an implementation of the conveying device.
FIG. 3 is a perspective view of another implementation of the conveying device.
FIG. 4 is a top view of another implementation of the conveying device.
FIG. 5 is a top view of yet another implementation of the conveying device.
FIG. 6 is a top view of still another implementation of the conveying device.

### Illustration for Reference Numerals:

first straight guide rail 100; first conveying end 101; second conveying end 102; second straight guide rail 200; first curved guide rail 300; inner guide member 310; outer guide member 320; coil 330; inner auxiliary member 301; outer auxiliary member 302; first connecting end 311; second connecting end 312; third straight guide rail 400; second curved guide rail 500; pallet 600.

### DETAILED DESCRIPTION

The technical solutions in the embodiments of the present application will be clearly and completely described below with reference to the accompanying drawings in the embodiments of the present application. Apparently, the described embodiments are only some of the embodiments of the present application, rather than all of the embodiments. Based on the embodiments of the present application, all other embodiments obtained by those of ordinary skill in the art without making creative efforts shall fall within the protection scope of the present application.

In the description of the present application, it is to be understood that the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application.

In addition, the terms "first" and "second" are used for descriptive purposes only, which cannot be construed as indicating or implying a relative importance, or implicitly specifying the number of the indicated technical features. Therefore, the features defined with "first" and "second" may explicitly or implicitly include at least one of the features. In the description of the present application, "a plurality of" means at least two, such as two or three, unless otherwise defined explicitly and specifically.

In the present application, unless otherwise specified and defined explicitly, the terms "mounting", "connecting", "coupling", and "fixation" should be understood in a broad sense, which may be, for example, a fixed connection, a detachable connection, or an integral connection; a mechanical connection or an electrical connection; or a direct connection, an indirect connection via an intermediate medium, an internal connection between two elements, or interaction between two elements, unless otherwise defined explicitly. Those of ordinary skill in the art can understand specific meanings of the above terms in the present application according to specific situations.

In the present application, unless otherwise explicitly specified and defined, the expression of a first feature being "on" or "under" a second feature may be the case that the first feature is in direct contact with the second feature, or the first feature is in indirect contact with the second feature via an intermediate medium. Furthermore, the expression of the first feature being "over", "above" and "on top of" the second feature may be the case that the first feature is directly above or obliquely above the second feature, or only means that the first feature is higher in level than the second feature. The expression of the first feature being "below", "underneath" or "under" the second feature may be the case that the first feature is directly under or obliquely under the second feature, or only means that the first feature is lower in level than the second feature.

It is to be noted that when one element is referred to as being "fixed to" or "arranged on" another element, it may be directly disposed on the another element or an intermediate element may exist. When one element is considered to be "connected to" another element, it may be directly connected to the another element or an intermediate element may co-exist. The terms "vertical", "horizontal", "up", "down", "left", "right" and similar expressions used herein are for illustrative purposes only and do not represent unique implementations.

Logistics conveyor lines are widely used in various fields such as express sorting, warehouse conveying, and manufacturing. Conventional logistics conveyor lines mostly adopt belt transmission. The principle of belt transmission is to use friction to convey workpieces, making emergency stopping impossible. This limits a conveying speed thereof and directly affects overall efficiency of the conveyor line. In the related art, the conveying of workpieces achieved through a magnetic driving technology features a fast conveying speed, a low maintenance cost, high flexibility etc., and has been increasingly favored.

A magnetic driving conveyor line mainly includes a mover and a stator. Current flows through a coil of the stator to generate a magnetic field, which interacts with a magnetic field of a permanent magnet plate on the mover to cause motion. A position detection device obtains motion state data such as a position and a speed of the mover and sends such data to a control system. By controlling the current in the coil, strength and a direction of the magnetic field are adjusted to maintain a desired position and speed of the mover, thereby achieving precise control over the motion of the mover.

Due to a flexible design feature of the magnetic driving conveyor line, in an actual production process, different shapes of tracks such as linear, circular, and curved tracks are designed according to factors such as spatial limitations and transportation requirements, so as to adapt to different application scenarios to the greatest extent. For a region with a specific motion path requirement, a curved track may be adopted to flexibly adjust the layout, bypass obstacles without being constrained by space, minimize friction, achieve smoother and faster movement, and improve efficiency and a speed of the magnetic levitation conveyor line. Compared with right-angle turning or other forms of turning, curved turning can be completed within a relatively short distance, thereby saving space and improving efficiency.

The application of the magnetic driving conveyor line is not limited to the field of material transportation. Due to advantages such as flexible design, high-precision control, and high stability, the magnetic driving conveyor line may also be widely used in fields such as precision machinery manufacturing, electronic information, and biomedicine. For example, in the biomedical field, the magnetic driving conveyor lines may be used to achieve operations such as drug transportation and cell transplantation with micron-level precision, improving accuracy and safety of medical processes.

In the related art, due to a continuous integrated curved turning structure, a pallet carrying materials may be subjected to additional force and moment during the turning process, which affects movement and stability of the pallet, and, products with different loads and sizes cannot be flexibly transported, resulting in a decline in overall transportation efficiency. Moreover, due to a strict requirement of an integrated structure for a site, a large space is required and it is difficult to adjust a conveying direction of the pallet.

With respect to the above problems, the present application provides a conveying device. The conveying device can flexibly transport pallets. By using different device combinations, a turning angle combination of a turning conveying group can be changed. On the one hand, this facilitates the layout of the conveyor line, has a low requirement for a site, and allows a flexible layout to bypass obstacles without spatial constraints, and can adapt to different scenarios to the greatest extent. On the other hand, this can also facilitate adjustment of an angle and a direction of a pallet loaded with products on the magnetic driving conveyor line, which can meet different turning speeds, loads, sizes, and changing conveying angles, achieving smoother and faster movement and improving efficiency and a speed of the magnetic driving conveyor line.

A pallet is arranged on the logistics conveyor line. The pallet generally has a trolley-like structure and can carry workpieces to move on the logistics conveyor line. Specifically, in some implementations, the logistics conveyor line adopts a magnetic driving technology for material transportation. A magnetic plate on the pallet is electromagnetically coupled with a coil on the logistics conveyor line to drive the pallet to move. In addition, the logistics conveyor line may also be provided with an electrified rail, which can supply energy and drive the pallet while the pallet is moving. In some other implementations, alternatively, the logistics conveyor line may primarily serve a guiding and limiting function, while the pallet is provided with a power source to enable autonomous driving.

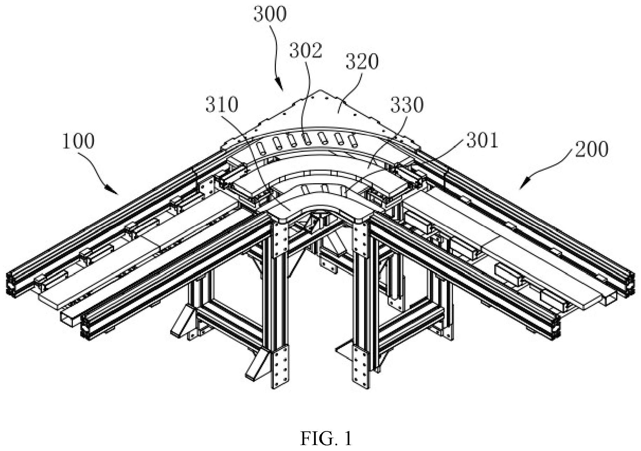

Referring to FIG. 1 to FIG. 6, a conveying device according to the first aspect of the present application is configured to convey a pallet 600, and includes a linear conveying mechanism and a curved conveying mechanism. The linear conveying mechanism is provided with a first conveying end 101 and a second conveying end 102. The curved conveying mechanism is provided with a first connecting end 311 and a second connecting end 312. At least one linear conveying mechanism and at least one curved conveying mechanism are respectively provided. The linear conveying mechanism and the curved conveying mechanism are arbitrarily combinable and connected end to end, so as to change a conveying direction of the pallet 600. When the linear conveying mechanism is connected with the curved conveying mechanism, one of the first conveying end 101 and the second conveying end 102 of the linear conveying mechanism is connected with one of the first connecting end 311 and the second connecting end 312 of the curved conveying mechanism. When two adjacent curved conveying mechanisms are connected to each other, one of the first connecting end 311 and the second connecting end 312 of one curved conveying mechanism is connected with one of the first connecting end 311 and the second connecting end 312 of the other curved conveying mechanism.

Referring to FIG. 1, the conveying device of the present application is configured to convey the pallet 600. The pallet 600 may be of any form and size, as long as it can cooperate with the conveying device to move on the conveying device. The specific form of the pallet 600 is not limited herein and may be selected according to an actual application requirement. Specifically, the conveying device mainly includes the linear conveying mechanism and the curved conveying mechanism. The linear conveying mechanism is configured with the first conveying end 101 and the second conveying end 102 in a conveying direction, and the curved conveying mechanism is configured with the first connecting end 311 and the second connecting end 312 in the conveying direction. The system includes at least one linear conveying mechanism and at least one curved conveying mechanism, which may be arbitrarily combined, and as long as they are connected end to end, the conveying direction of the pallet 600 can be changed. "Arbitrarily combined" as used herein means that the conveying device may include a plurality of linear conveying mechanisms and a plurality of curved conveying mechanisms. The linear conveying mechanism is configured to convey the pallet 600 in a linear direction. The curved conveying mechanism is generally arranged between two linear conveying mechanisms to transfer the pallet 600 between the two linear conveying mechanisms, to change the conveying direction and a conveying angle of the pallet 600. Further, between two linear conveying mechanisms, there may not be just one curved conveying mechanism, two, three, four, or more curved conveying mechanism may be provided. This can be specifically selected according to an arc angle of the curved conveying mechanism and a required turning angle of the pallet 600, and the like. Through the above arbitrary combination of linear conveying mechanisms and curved conveying mechanisms, by changing a turning angle combination of the turning conveying group or a reverse turning conveying group, the product pallet 600 is conveyed at different angles and in different directions on the magnetic levitation conveyor line. This allows the product pallet 600 to stop at any turning position, which can meet different turning speeds, loads, sizes, and changing conveying angles, achieving smoother and faster movement and improving efficiency and a speed of the magnetic levitation conveyor line.

When the conveying direction of the pallet 600 is required to be changed, the linear conveying mechanism and the curved conveying mechanism may be connected to each other. During this connection process, one of the first conveying end 101 and the second conveying end 102 of the linear conveying mechanism may be connected with one of the first connecting end 311 and the second connecting end 312 of the curved conveying mechanism. This precise connection ensures smooth transition when the pallet 600 changes its conveying direction, reducing impact caused by a speed change.

In this implementation, for example, an arc angle of the curved conveying mechanism is an arc angle corresponding to an angle of 90 degrees. When the conveying direction of the pallet 600 is required to be changed, for example, the conveying direction of the pallet 600 is required to be perpendicular to an original conveying direction, a curved conveying mechanism with the arc angle corresponding to an angle of 90 degrees may be arranged between two linear conveying mechanisms. When the conveying direction of the pallet 600 is required to be changed, for example, the conveying direction of the pallet 600 is required to be the same as or opposite to the original conveying direction but the two are not on a same straight line, two or four (a multiple of 2) curved conveying mechanisms each with an arc angle corresponding to an angle of 90 degrees may be arranged between two linear conveying mechanisms to change the conveying direction of the pallet 600.

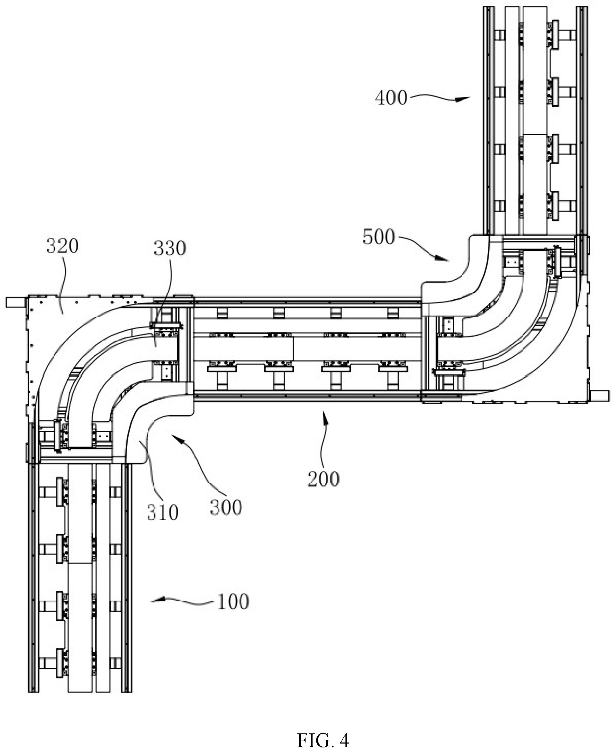

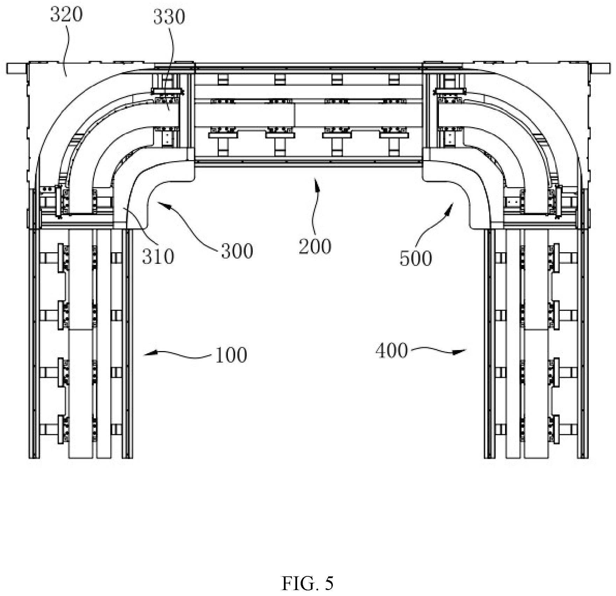

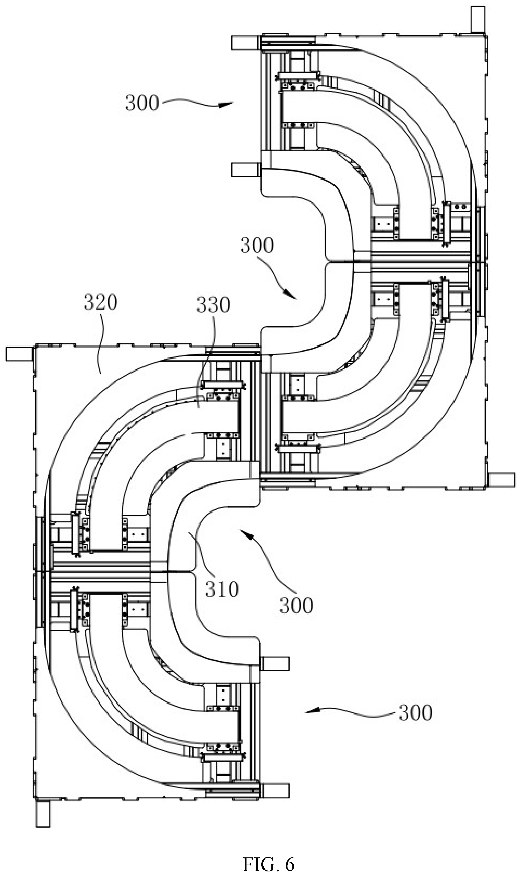

Specifically, the setting is generally applicable to obstacle avoidance or specific motion paths. For example, referring to FIG. 4, in an embodiment, two curved conveying mechanisms are used, so that the pallet 600 is in the same direction, but not on a same straight line, as the original conveying direction. Referring to FIG. 5, in another embodiment, two curved conveying mechanisms are used, so that the pallet 600 is opposite to the original conveying direction, and not on a same straight line as the original conveying direction. In addition, referring to FIG. 6, four curved conveying mechanisms may alternatively be used.

When two adjacent curved conveying mechanisms are required to be connected to each other, one of the first connecting end 311 and the second connecting end 312 of one curved conveying mechanism is connected with one of the first connecting end 311 and the second connecting end 312 of the other curved conveying mechanism. This flexible connection manner allows the curved conveying mechanisms to be more easily connected together, thereby forming complex conveying paths to meet various different conveying requirements of the pallet 600.

Through such design, the conveying device of the present application can efficiently and flexibly accomplish a conveying task of pallets 600 of various shapes and directions, greatly improving efficiency and flexibility of a logistics system. Meanwhile, due to the modular design, mounting and maintenance of the device become simple and convenient, greatly reducing operating costs.

The conveying device according to the first aspect of the present application has the following beneficial effects: it can optimize the overall layout and improve stability of the pallet 600. Specifically, in this implementation, due to the arrangement of the curved conveying mechanism and the linear conveying mechanism and the fact that the curved conveying mechanism and the linear conveying mechanism are arbitrarily combinable and connected end to end, the pallet 600 can be smoothly transitioned from one linear conveying mechanism to another linear conveying mechanism, thereby achieving turning of the pallet 600. This design enables the pallet 600 to flexibly adjust the direction according to an actual requirement during conveying, avoiding the problems of interrupting the conveying and manually adjusting the direction of the pallet 600 in conventional conveying manners, and improving production efficiency.

Meanwhile, by changing the turning angle combination of the turning conveying group (i.e., by splicing multiple curved conveying mechanisms to form turning angle combinations of different angles and different directions), the product pallet 600 can be conveyed on the magnetic driving conveyor line at different angles and in different directions. This conveying manner can not only allow the product pallet 600 to stop at any turning position, but also enable starting and stopping at any position according to an actual production requirement, making the entire production line more intelligent and automated.

In addition, since the combination between the curved conveying mechanism and the linear conveying mechanism is highly flexible, the layout can be carried out according to an actual site condition, enabling the pallet 600 to be conveyed at different angles and in different directions. This layout manner not only helps improve production efficiency, but also enables a flexible layout according to an actual site condition, facilitates obstacle avoidance, and optimizes the overall layout of the conveyor line.

In some implementations, the linear conveying mechanism includes a first straight guide rail 100 and a second straight guide rail 200, and the curved conveying mechanism includes a first curved guide rail 300. The first curved guide rail 300 connects the first straight guide rail 100 and the second straight guide rail 200. The first curved guide rail 300 guides the pallet 600 to move from the first straight guide rail 100 to the second straight guide rail 200, or the first curved guide rail 300 guides the pallet 600 to move from the second straight guide rail 200 to the first straight guide rail 100. With the above structural arrangement, the conveying of the pallet 600 can be facilitated. The pallet 600 can turn via the first curved guide rail 300, and a turning angle thereof may be determined according to an arc angle of the first curved guide rail 300, making it convenient to adjust a transportation angle and a transportation direction to meet different production requirements. Meanwhile, due to the adoption of the form of curved turning, compared with right-angle turning or other forms of turning, the curved turning can be completed within a relatively short distance, whereby, this saves space, improves efficiency, and can reduce friction, and enhance stability of the pallet 600.

In addition, for the transportation direction of the pallet 600, it can not only move from the first guide rail to the second guide rail, and when some processes require circulation or reverse conveying, the pallet 600 can also be controlled to move from the second guide rail to the first guide rail, which can quickly achieve reverse transportation of the pallet 600 and improve flexibility and operability of the conveyor line.

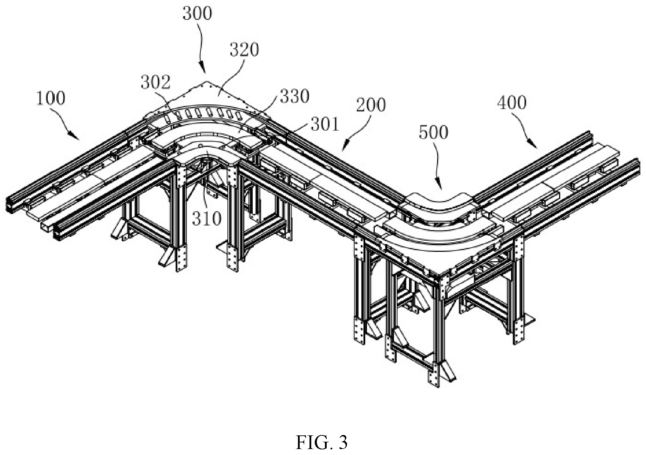

Referring to FIG. 3 to FIG. 5, in some implementations, the linear conveying mechanism further includes a third straight guide rail 400, and the curved conveying mechanism further includes a second curved guide rail 500. The first curved guide rail 300 connects the first straight guide rail 100 and the second straight guide rail 200, and the second curved guide rail 500 connects the second straight guide rail 200 and the third straight guide rail 400. The first curved guide rail 300 guides the pallet 600 to move from the first straight guide rail 100 to the second straight guide rail 200, and the second curved guide rail 500 guides the pallet 600 to move from the second straight guide rail 200 to the third straight guide rail 400. Alternatively, the second curved guide rail 500 guides the pallet 600 to move from the third straight guide rail 400 to the second straight guide rail 200, and the first curved guide rail 300 guides the pallet 600 to move from the second straight guide rail 200 to the first straight guide rail 100. Specifically, in addition to the above structural forms, the linear conveying mechanism may further include a third straight guide rail 400, and the curved conveying mechanism may further include a second curved guide rail 500. The second curved guide rail 500 is configured to connect the second straight guide rail 200 and the third straight guide rail 400, so that the pallet 600 moves from the first straight guide rail 100 to the second straight guide rail 200 via the first curved guide rail 300, and then moves to the third straight guide rail 400 via the second curved guide rail 500, thereby achieving turning of the pallet 600. Referring to FIG. 4, one structural form is that a movement direction of the pallet 600 on the third straight guide rail 400 is the same as a movement direction of the pallet 600 on the first straight guide rail 100. Referring to FIG. 5, another structural form is that the movement direction of the pallet 600 on the third straight guide rail 400 is opposite to the movement direction of the pallet 600 on the first straight guide rail 100. Different structural settings enable the conveying device to flexibly transfer the pallet 600, allowing the pallet 600 to operate smoothly and efficiently.

In addition, referring to FIG. 6, four curved conveying mechanisms may alternatively be spliced to turn the pallet 600. This structure is a continuous curve with a relatively large turning angle. To reduce a risk of falling of a carried product due to shaking of the pallet 600 during the turning, a radius of the turning conveying group can be appropriately increased to make the turning smoother and reduce a risk of collision between consecutive pallets 600.

In some implementations, an arc angle of the first curved guide rail 300 and an arc angle of the second curved guide rail 500 are arc angles corresponding to an angle of 90 degrees to 180 degrees. Specifically, to achieve turning of the pallet 600 so that the pallet 600 is transported at different angles and in different directions, the arc angle of the first curved guide rail 300 and the arc angle of the second curved guide rail 500 can be set to arc angles corresponding to an angle of 90 degrees to 180 degrees. As a result, the pallet 600 can not only make a 90-degree turn in a single turning action, but also turn at other angles, further achieving stable transportation of the pallet 600 and improving conveying efficiency. At the same time, other devices or obstacles on site can also be avoided, optimizing the spatial layout of the conveyor line.

In some implementations, the arc angle of the first curved guide rail 300 and the arc angle of the second curved guide rail 500 are arc angles corresponding to an angle of 90 degrees. A conveying direction of the first straight guide rail 100 crosses that of the second straight guide rail 200, and the conveying direction of the first straight guide rail 100 is the same as that of the third straight guide rail 400. As described above, the arc angle of the first curved guide rail 300 and the arc angle of the second curved guide rail 500 in this implementation may be arc angles corresponding to an angle of 90 degrees to 180 degrees. Herein, an arc angle corresponding to an angle of 90 degrees is used as an example for illustration. When the arc angle of the first curved guide rail 300 and the arc angle of the second curved guide rail 500 are the arc angles corresponding to the angle of 90 degrees, perpendicular turning of the pallet 600 is achieved. Under the premise that a spatial condition permits, this structure, compared with the manner of consecutively splicing multiple curved conveying mechanisms as shown in FIG. 6, can make a turning arc angle of the pallet 600 smoother, thereby improving stability and conveying efficiency.

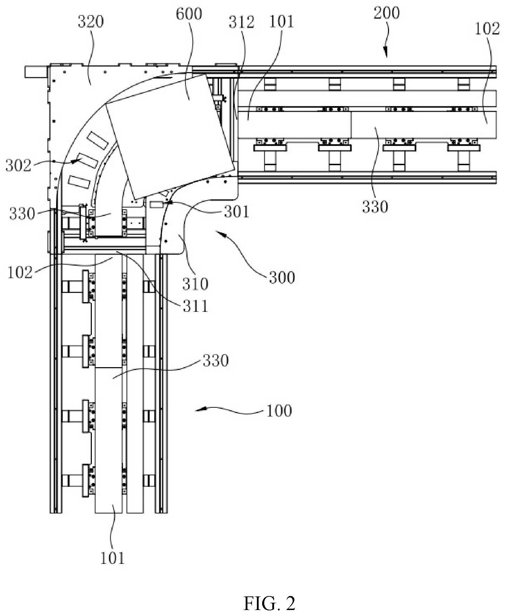

In some implementations, both the linear conveying mechanism and the curved conveying mechanism are each provided with a coil 330, and the bottom of the pallet 600 is provided with a magnetic plate. The magnetic plate cooperates with the coil 330 to drive the pallet 600 to move on the linear conveying mechanism and the curved conveying mechanism. Specifically, the pallet 600 is arranged on the conveying device and can move on the linear conveying mechanism and the curved conveying mechanism. Referring to FIG. 2, in this implementation, the logistics conveyor line adopts a magnetic driving technology for material transportation. A magnetic plate (not shown) on the pallet 600 is electromagnetically coupled with the coil 330 on the logistics conveyor line to drive the pallet 600 to move. In addition, the logistics conveyor line may also be provided with an electrified rail, which can supply energy and drive the pallet 600 while pallet 600 is moving. In some other implementations, alternatively, the logistics conveyor line may primarily serve a guiding and limiting function, and the pallet 600 is provided with a power source to enable autonomous driving.

In some implementations, the linear conveying mechanism and the curved conveying mechanism are each further provided with an inner guide member 310 and an outer guide member 320. The inner guide member 310 and the outer guide member 320 are disposed on two sides of the coil 330 to guide the pallet 600. The inner guide member 310 and the outer guide member 320 can guide the pallet 600, constrain a movement trajectory of the pallet 600 carrying the product, and enable the pallet 600 to turn smoothly. This structural design can accommodate different turning speeds, loads, dimensions, and changing conveying angles, achieving smoother and faster movement, and improving efficiency and a speed of the magnetic levitation conveyor line.

In some implementations, the curved conveying mechanism is further provided with an inner auxiliary member 301 and an outer auxiliary member 302. The inner auxiliary member 301 and the outer auxiliary member 302 are respectively disposed on the two sides of the coil 330. The inner auxiliary member 301 and the outer auxiliary member 302 respectively abut against a bottom surface of the pallet 600 to provide auxiliary guidance for the pallet 600. The inner auxiliary member 301 and the outer auxiliary member 302 may be rollers or pulleys. In this implementation, rollers are taken as an example for illustration. A plurality of rollers may be provided, respectively laid on the two sides of the coil 330. By adopting the form of rollers, sliding friction can be converted into rolling friction, which can reduce motion resistance of the pallet 600, further assist the pallet 600 in turning smoothly, and improve transportation stability and transportation efficiency of the pallet 600.

In some implementations, a sensor and a monitoring system are further included, so that a position of the pallet 600 and distances between the pallets 600 in real time are monitored. When the pallet 600 moves on the conveying device, to further reduce a risk of collision between consecutive pallets 600, a sensor and a detection system may also be mounted in a magnetic driving system for real-time monitoring of the position of the pallet 600 and distances between the pallets 600. Once a collision risk is detected, the system can promptly take measures to make an adjustment or make an emergency stop. In addition, by optimizing a control algorithm of the magnetic driving system, precise control over the mover can be achieved to avoid collisions. For example, appropriate speed adjustment and track offset compensation can be implemented during turning to ensure that the mover turns smoothly on the curved stator.

A conveyor line according to the second aspect of the present application includes the conveying device according to any one of the above implementations. Compared with the conveyor line in the related art, in a conveyor line to which the conveying device according to any one of the above implementations of the present application is applied, the linear conveying mechanism and the curved conveying mechanism of the conveying device can be freely combined according to an actual site condition, thereby optimizing the overall layout. This enables the pallet 600 to be conveyed at different angles and in different directions, and can simultaneously improve stability of the pallet 600 during transportation process, to achieve stable and efficient conveying.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present application, and their description is specific and detailed, but cannot therefore be understood as a limitation on the patent scope of the present application. It should be noted that those of ordinary skill in the art may further make variants and improvements without departing from the conception of the present application, and these all fall within the protection scope of the present application. Therefore, the patent protection scope of the present application should be subject to the appended claims.

## Claims

1. A conveying device configured for conveying a pallet, comprising:
a linear conveying mechanism provided with a first conveying end and a second conveying end; and
a curved conveying mechanism provided with a first connecting end and a second connecting end;
wherein at least one linear conveying mechanism and at least one curved conveying mechanism are respectively provided, and the linear conveying mechanism and the curved conveying mechanism are arbitrarily combinable and connected end to end, so as to change a conveying direction of the pallet;
when the linear conveying mechanism is connected with the curved conveying mechanism, one of the first conveying end and the second conveying end of the linear conveying mechanism is connected with one of the first connecting end and the second connecting end of the curved conveying mechanism; and
when two adjacent curved conveying mechanisms are connected to each other, one of the first connecting end and the second connecting end of one curved conveying mechanism is connected with one of the first connecting end and the second connecting end of another curved conveying mechanism.

2. The conveying device according to claim 1, wherein the linear conveying mechanism comprises a first straight guide rail and a second straight guide rail, and the curved conveying mechanism comprises a first curved guide rail; the first curved guide rail connects the first straight guide rail and the second straight guide rail.

3. The conveying device according to claim 2, wherein the first curved guide rail guides the pallet to move from the first straight guide rail to the second straight guide rail.

4. The conveying device according to claim 2, wherein the first curved guide rail guides the pallet to move from the second straight guide rail to the first straight guide rail.

5. The conveying device according to claim 2, wherein the linear conveying mechanism further comprises a third straight guide rail, and the curved conveying mechanism further comprises a second curved guide rail; and
the first curved guide rail connects the first straight guide rail and the second straight guide rail, and the second curved guide rail connects the second straight guide rail and the third straight guide rail; the first curved guide rail guides the pallet to move from the first straight guide rail to the second straight guide rail, and the second curved guide rail guides the pallet to move from the second straight guide rail to the third straight guide rail.

6. The conveying device according to claim 2, wherein the linear conveying mechanism further comprises a third straight guide rail, and the curved conveying mechanism further comprises a second curved guide rail; the second curved guide rail guides the pallet to move from the third straight guide rail to the second straight guide rail, and the first curved guide rail guides the pallet to move from the second straight guide rail to the first straight guide rail.

7. The conveying device according to claim 6, wherein the second curved guide rail is configured to connect the second straight guide rail and the third straight guide rail, so that the pallet moves from the first straight guide rail to the second straight guide rail via the first curved guide rail, and then to the third straight guide rail via the second curved guide rail, to turn the pallet.

8. The conveying device according to claim 5, wherein an arc angle of the first curved guide rail and an arc angle of the second curved guide rail are arc angles corresponding to an angle of 90 degrees to 180 degrees.

9. The conveying device according to claim 5, wherein an arc angle of the first curved guide rail and an arc angle of the second curved guide rail are arc angles corresponding to an angle of 90 degrees;
wherein a conveying direction of the first straight guide rail crosses a conveying direction of the second straight guide rail, and the conveying direction of the first straight guide rail is the same as a conveying direction of the third straight guide rail.

10. The conveying device according to claim 1, wherein the linear conveying mechanism and the curved conveying mechanism are each provided with a coil, and a bottom of the pallet is provided with a magnetic plate, the magnetic plate cooperating with the coil to drive the pallet to move on the linear conveying mechanism and the curved conveying mechanism.

11. The conveying device according to claim 10, wherein the linear conveying mechanism and the curved conveying mechanism are each further provided with an inner guide member and an outer guide member, the inner guide member and the outer guide member being disposed on two sides of the coil to guide the pallet.

12. The conveying device according to claim 11, wherein the curved conveying mechanism is further provided with an inner auxiliary member and an outer auxiliary member, the inner auxiliary member and the outer auxiliary member being respectively disposed on the two sides of the coil, and the inner auxiliary member and the outer auxiliary member respectively abutting against a bottom surface of the pallet to provide auxiliary guidance for the pallet.

13. The conveying device according to claim 12, wherein the inner auxiliary member and the outer auxiliary member are rollers or pulleys.

14. The conveying device according to claim 1, further comprising a sensor and a monitoring system so that a position of the pallet and distances between pallets in real time are monitored.

15. A conveyor line, comprising the conveying device according to any one of claims 1 to 14.
